# EUROPÄISCHE PATENTANMELDUNG

(11) **EP 2 645 240 A2**
(43) Veröffentlichungstag der Anmeldung: **02.10.2013**
(21) Anmeldenummer: 13159323.8
(22) Anmeldetag: 15.03.2013
(51) Int. Cl.: G06F 9/44, G06F 21/10

(54) **Verfahren zum automatischen Aktualisieren eines Computersystems und Vorrichtung**

(30) Priorität: 26.03.2012 DE 102012204804
(71) Anmelder: Siemens Aktiengesellschaft, 80333 München (DE)
(72) Erfinder: Kröselberg, Dirk, 80469 München (DE); Lukas, Klaus, 81739 München (DE)

(57) **Zusammenfassung**

Die vorliegende Erfindung offenbart ein Verfahren zum automatischen Aktualisieren eines Computersystems, insbesondere einer Steuerung für Industrieanlagen, das aus mehreren Komponenten besteht, mit den Schritten Zuordnen mindestens einer Komponente des zu aktualisierenden Computersystems zu einer Kritikalitätsdomäne aus einer Vielzahl von vorgegebenen Kritikalitätsdomänen, Zuweisen einer Kritikalitätsstufe aus einer Vielzahl von vorgegebenen Kritikalitätsstufen zu mindestens einer für eine der Komponenten des Computersystems vorgesehenen Software-Aktualisierung und automatisches Übertragen der Software-Aktualisierungen an die entsprechenden Komponenten des Computersystems gemäß der den Komponenten zugeordneten Kritikalitätsdomäne und gemäß den den Software-Aktualisierungen zugewiesenen Kritikalitätsstufen. Ferner offenbart die vorliegende Erfindung eine Vorrichtung.

## Beschreibung

Die vorliegende Erfindung betrifft ein Verfahren zum automatischen Aktualisieren eines Computersystems und eine entsprechende Vorrichtung.

### Stand der Technik

Für Komponenten von Computersystemen, wie z.B. dem Betriebssystem, zusätzlich installierten Software-Modulen oder Applikationen sind regelmäßige Updates bzw. Patches (im folgenden Patches genannt) üblich. Solche Patches fügen einer Komponente neue Funktionen hinzu oder ändern bestehende Funktionen.

Insbesondere sind sicherheitsrelevante Patches bekannte, die die Verwundbarkeit eines Systems gegenüber Angriffen, z.B. über ein Netzwerk, durch Malware, durch Industriespione, durch Viren und dergleichen reduzieren und bekannte Sicherheitslücken schließen. Dies trifft beispielsweise auf übliche Industrie- und Büro-Umgebungen zu.

In Rahmen dieser Patentanmeldung wird der Begriff "Sicherheit" bezogen auf den Gegenstand der vorliegenden Patentanmeldung verwendet. Im englischen Sprachgebrauch ist dabei zu unterscheiden, ob der Begriff Sicherheit die Betriebssicherheit, "safety", eines Computersystems betrifft, oder ob der Begriff Sicherheit die Einbruchssicherheit, "security", eines Computersystems betrifft. Der Begriff Sicherheit bezieht sich dabei in der vorliegenden Patentanmeldung sowohl auf die Betriebssicherheit, "safety", eines Computersystems als auch auf die Einbruchssicherheit, "security", eines Computersystems.

Zunehmend wird auch die Aktualisierung von Komponenten in industriellen Anlagen oder Embedded-Systemen relevant. Wartungsoperationen für solche Computersysteme, z.B. in Industrie-PCs, Embedded-Systemen oder Leitzentren können beispielsweise durch Austauschen einer kompletten Firmware oder eines kompletten Software-Abbildes, sog. Image, vorgenommen werden.

In komplexen Umgebungen, z.B. bei Windows-basierten Systemen, sind allerdings regelmäßige Patches oder Service-Packs für einzelne Komponenten des Systems üblich. Sowohl neue Firmware als auch Software-Images und einzelne Patches oder Service-Packs enthalten dabei üblicherweise Programmcode, welcher auf die Verbesserung der Sicherheit bzgl. Stabilität und auch gegenüber Angriffen von außen abzielt.

In diesem Zusammenhang wird auch von der "Resilience" eines Computersystems gesprochen. Die Resilience bezeichnet dabei die Widerstandsfähigkeit eines Computersystems gegenüber Fehlern und gegenüber Angriffen von außen.

Für die Resilience eines Computersystems, welches sich aus verschiedenen Komponenten zusammensetzt, z.B. einer Steuerung für Industrieanlagen, ist üblicherweise eine bestimmte Menge von Komponenten des Computersystems kritisch. Dies können das Betriebssystem, Treiber, Bibliotheken oder dergleichen sein. Andere Komponenten können bzgl. der kritischen Funktionalität des Computersystems weniger relevant sein.

Um die Resilience eines Computersystems kontinuierlich zu verbessern, ist es üblich, kritische Systeme zu patchen bzw. zu aktualisieren und dadurch einen aktuellen Stand der Software in diesen Computersystemen zu gewährleisten. Dadurch wird die Anfälligkeit dieser Computersysteme gegen das Ausnutzen von Schwachstellen reduziert. Üblicherweise wird dabei aber nicht auf einzelne Komponenten eines Systems eingegangen.

Dieses Vorgehen ist beispielsweise in dem NERC CIP Standard offenbart.

In vielen sicherheitsrelevanten, auch "safety-critical" oder "security relevant" genannten, Systemen muss ferner die Stabilität und Funktionalität des Systems während und nach einer Aktualisierung sichergestellt werden. Dies kann z.B. Systeme im Umfeld der industriellen Steuerungen oder Steuersysteme für Stromnetze betreffen.

### Zusammenfassung

Es ist daher ein Aufgabe der vorliegenden Erfindung eine verbesserte Möglichkeit zum automatischen aktualisieren von Computersystemen bereitzustellen.

Demgemäß ist vorgesehen:
- Ein Verfahren zum automatischen Aktualisieren eines Computersystems, insbesondere einer Steuerung für Industrieanlagen, das aus mehreren Komponenten besteht, mit den Schritten Zuordnen mindestens einer Komponente des zu aktualisierenden Computersystems zu einer Kritikalitätsdomäne aus einer Vielzahl von vorgegebenen Kritikalitätsdomänen, Zuweisen einer Kritikalitätsstufe aus einer Vielzahl von vorgegebenen Kritikalitätsstufen zu mindestens einer für eine Komponente des Computersystems vorgesehenen Software-Aktualisierung, und automatisches Übertragen der Software-Aktualisierungen an die entsprechenden Komponenten des Computersystems gemäß der den Komponenten zugeordneten Kritikalitätsdomäne und gemäß den den Software-Aktualisierungen zugewiesenen Kritikalitätsstufen.
- Eine Vorrichtung zur automatischen Software-Aktualisierung eines Computersystems mit einer Zuordnungseinrichtung, welche dazu ausgebildet ist, mindestens eine Komponente des zu aktualisierenden Computersystems einer Kritikalitätsdomäne aus einer Vielzahl von vorgegebenen Kritikalitätsdomänen zuzuordnen, mit einer Zuweisungseinrichtung, welche dazu ausgebildet ist, mindestens einer für eine der Komponenten des Computersystems vorgesehenen Software-Aktualisierung eine Kritikalitätsstufe aus einer Vielzahl von vorgegebenen Kritikalitätsstufen zuzuweisen, mit einer automatischen Software-Übertragungseinrichtung, welche dazu ausgebildet ist, die Software-Aktualisierungen an die entsprechenden Komponenten des Computersystems gemäß den den Komponenten zugeordneten Kritikalitätsdomänen und gemäß den den Software-Aktualisierungen zugewiesenen Kritikalitätsstufen zu übertragen.

Die der vorliegenden Erfindung zu Grunde liegende Erkenntnis besteht darin, dass unterschiedliche Software-Aktualisierungen für Komponenten eines Computersystems die Funktionalität des Computersystems auf unterschiedliche Art und Weise beeinflussen können.

Die der vorliegenden Erfindung zu Grunde liegende Idee besteht nun darin, dieser Erkenntnis Rechnung zu tragen und ein Verfahren vorzusehen, bei welchem nicht nur die Art des Computersystems an sich bewertet wird, sondern bei welcher die einzelnen Komponenten des Computersystems in unterschiedliche Kritikalitätsdomänen eingeordnet werden. Kritikalitätsdomänen stellen im Rahmen der zu Grunde liegenden Idee eine Methodik zur Bewertung der Kritikalität einzelner Systeme, Komponenten, oder Gruppen von Komponenten dar. Ferner sieht die vorliegende Erfindung auch vor, den für die Komponenten des Computersystems vorgesehenen Software-Aktualisierungen jeweils eine Kritikalitätsstufe zuzuweisen.

Schließlich werden die einzelnen Software-Aktualisierungen in Abhängigkeit von den entsprechenden Kritikalitätsdomänen und den Kritikalitätsstufen automatisch an die entsprechenden Komponenten übertragen.

Dadurch wird es z.B. möglich, innerhalb eines einzigen Computersystems für unterschiedliche Komponenten unterschiedliche Vorgehensweisen bei einer Software-Aktualisierung der jeweiligen Komponente einzusetzen.

Das erfindungsgemäße Verfahren ermöglicht es daher Software-Aktualisierungen einzelner Komponenten eines Computersystems sehr feingranular und selektiv zu steuern und umzusetzen.

Vorteilhafte Ausführungsformen und Weiterbildungen ergeben sich aus den Unteransprüchen sowie aus der Beschreibung unter Bezugnahme auf die Figuren.

In einer Ausführungsform ist der Schritt Festlegen von Meta-Tags und/oder Kritikalitäts-Kennzahlen und/oder Funktionsbeschreibungen für mindestens eine Komponente des Computersystems vorgesehen, wobei das Zuordnen basierend auf den für die jeweilige Komponente des Computersystems festgelegten Meta-Tags und/oder Kritikalitäts-Kennzahlen und/oder Funktionsbeschreibungen automatisch durchgeführt wird.

Werden den Komponenten des Computersystems Meta-Tags und/oder Kritikalitäts-Kennzahlen und/oder Funktionsbeschreibungen zugeordnet, und diese anschließend automatisch ausgewertet, um die entsprechenden Komponenten jeweils einer Kritikalitätsdomäne zuzuordnen, können Komponenten in unterschiedlichen Computersystemen eingesetzt werden, ohne dass in jedem Computersystem erneut die Zuordnung z.B. von Hand vorgenommen werden müsste.

Beispielsweise kann ein Hersteller einer Komponente eines Computersystems die Meta-Tags und/oder Kritikalitäts-Kennzahlen und/oder Funktionsbeschreibungen bereits bei der Herstellung der Komponente festlegen und mit der Komponente verknüpfen. Wird eine solche Komponente daraufhin in einem Computersystem eingesetzt, kann diese Komponente sehr einfach einer Kritikalitätsdomäne zugeordnet werden.

In einer Ausführungsform ist der Schritt Festlegen von Meta-Tags und/oder Kritikalitäts-Kennzahlen und/oder Funktionsbeschreibungen für mindestens eine der Software-Aktualisierungen vorgesehen, wobei das Zuweisen basierend auf den für die jeweiligen Software-Aktualisierungen vergebenen Meta-Tags und/oder Kritikalitäts-Kennzahlen und/oder Funktionsbeschreibungen automatisch durchgeführt wird.

Werden den Software-Aktualisierungen Meta-Tags und/oder Kritikalitäts-Kennzahlen und/oder Funktionsbeschreibungen zugeordnet, und diese anschließend automatisch ausgewertet, um den entsprechenden Software-Aktualisierungen jeweils eine Kritikalitätsstufe zuzuweisen, können Software-Aktualisierungen sehr einfach die entsprechenden Kritikalitätsstufen zugewiesen werden.

Beispielsweise kann ein Hersteller einer Software-Aktualisierung die Meta-Tags und/oder Kritikalitäts-Kennzahlen und/oder Funktionsbeschreibungen bereits bei der Herstellung der Software-Aktualisierung festlegen und mit der Software-Aktualisierung verknüpfen. Soll eine solche Software-Aktualisierung daraufhin auf einer Komponente eines Computersystems eingespielt werden, kann diese Komponente sehr schnell und einfach bezüglich der Kritikalitätsstufe eingeordnet werden.

Die Verwendung von Meta-Tags und/oder Kritikalitäts-Kennzahlen und/oder Funktionsbeschreibungen zu Charakterisierung der Komponenten der Computersysteme und der Software-Aktualisierungen hat ferner den Vorteil, dass die Zuordnung der Kritikalitätsdomänen und Kritikalitätsstufen automatisch erfolgen kann.

Beispielsweise können in einer Ausführungsform bestimmte Meta-Tags festgelegt werden, die eine Zuordnung einer Komponente des Computersystems oder einer Software-Aktualisierung zu einer Kritikalitätsdomäne oder einer Kritikalitätsstufe ermöglicht.

In einer weiteren Ausführungsform können semantische Analyseverfahren genutzt werden, um die Funktionsbeschreibungen der Komponenten der Computersysteme und der Software-Aktualisierungen zu analysieren und eine entsprechende Kritikalitätsdomäne oder eine entsprechende Kritikalitätsstufe festzulegen.

In einer Ausführungsform sind die Schritte "Bestimmen einer Abhängigkeit mindestens einer der Komponenten des Computersystems von den weiteren Komponenten des Computersystems" und "Anpassen der Zuordnung der mindestens einen Komponente zu mindestens einer der vorgegebenen Kritikalitätsdomänen basierend auf der bestimmten Abhängigkeit der Komponente von den weiteren Komponenten des Computersystems" vorgesehen. Dies ermöglicht es, insbesondere hierarchisch aufgebaute Computersysteme, sicher zu aktualisieren. Es kann so beispielsweise verhindert werden, dass eine Komponente eines Computersystems mit einem schnellen aber evtl. unsicheren Verfahren aktualisiert wird, die zwar selbst eine sehr geringe Kritikalität aufweist, von der aber sehr kritische Komponenten des Computersystems abhängig sind. Aus der Betrachtung der Abhängigkeiten zwischen einzelnen Komponenten des Computersystems ergibt sich daher eine Art abhängigkeitsbasierte Aktualisierungsdringlichkeit.

In einer Ausführungsform sind die weiteren Schritte "Definieren mindestens einer relevanten Funktionalität des Computersystems", "Festlegen der Vielzahl von Kritikalitätsdomänen, wobei jede Kritikalitätsdomäne eine unterschiedliche Relevanz einer der Komponenten des Computersystems bezüglich der Durchführung der relevanten Funktionalitäten des Computersystems angibt", und "Festlegen der Vielzahl von Kritikalitätsstufen, wobei jede Kritikalitätsstufe ein Ausmaß eines Einflusses mindestens einer der Software-Aktualisierungen auf die relevanten Funktionalitäten angibt", vorgesehen. Beispielsweise kann die Sicherheit des Computersystems gegenüber Einbrüchen von außen, z.B. durch Angreifer (auch "Hacker" genannt) immer als eine relevante Funktionalität des Computersystems angesehen werden. In einem Computersystem für eine Industrieanlage kann z.B. als weitere relevante Funktionalität des Computersystems die korrekte Steuerung der Industrieanlage im Vordergrund stehen. Diese Betrachtung der relevanten Funktionalität kann dabei auch für einzelne Sub-Bereiche eines Computersystems durchgeführt werden. Beispielsweise kann eine einzelne Komponente eines Computersystems selbst auch als ein Computersystem betrachtet werden.

Die Kritikalitätsdomänen können auf Basis unterschiedlicher Faktoren definiert werden. Beispielsweise können Kritikalitätsdomänen basierend auf den Einflussmöglichkeiten beurteilt werden, die ein Angreifer über eine unsichere Komponente auf das Computersystem erlangt. Ferner können Kritikalitätsdomänen basierend auf einer Netzwerkarchitektur des Computersystems festgelegt werden. Beispielsweise kann ein Netzwerkabschnitt des Computersystems durch eine eigene Firewall gesondert geschützt sein. Dadurch könnten die Komponenten des Computersystems, welche sich in diesem Netzwerkabschnitt befinden einer Kritikalitätsdomäne zugeordnet werden, die eine geringe Kritikalität darstellt.

Ferner können Kritikalitätsstufen auf der Basis mehrerer Faktoren bewertet werden. Mögliche Faktoren sind unter anderem:
- Wie leicht ist es für Angreifer, die Schwachstelle auszunutzen (Wahrscheinlichkeit) ?
- Wie viel Kontrolle erlangt ein Angreifer durch die Schwachstelle über das System?
- Wie groß ist der mögliche wirtschaftliche Schaden?

Aus der Bewertung dieser Faktoren ergeben sich die Dringlichkeit, mit der die Software-Aktualisierung auf der betroffenen Komponente eingespielt werden sollte und damit die Kritikalitätsstufe der Software-Aktualisierung.

In einer Ausführungsform gibt eine erste Kritikalitätsdomäne eine hohe Kritikalität einer Komponente des Computersystems bezüglich der Durchführung der relevanten Funktionalitäten des Computersystems an. Zusätzlich oder alternativ gibt eine zweite Kritikalitätsdomäne eine mittlere Kritikalität einer Komponente des Computersystems bezüglich der Durchführung der relevanten Funktionalitäten des Computersystems an. Zusätzlich oder alternativ gibt eine dritte Kritikalitätsdomäne eine niedrige Kritikalität einer Komponente des Computersystems bezüglich der Durchführung der relevanten Funktionalitäten des Computersystems an.

In einer Ausführungsform gibt eine erste Kritikalitätsstufe ein hohes Ausmaß des Einflusses mindestens einer der Software-Aktualisierungen auf die relevanten Funktionalitäten an. Zusätzlich oder alternativ gibt eine zweite Kritikalitätsstufe ein mittleres Ausmaß des Einflusses mindestens einer der Software-Aktualisierungen auf die relevanten Funktionalitäten an. Zusätzlich oder alternativ gibt eine dritte Kritikalitätsstufe ein niedriges Ausmaß des Einflusses mindestens einer der Software-Aktualisierungen auf die relevanten Funktionalitäten an.

In einer Ausführungsform weist der Schritt des automatischen Aktualisierens auf:
- verzögertes Aktualisieren mindestens einer der Komponenten des Computersystems, welche der zweiten Kritikalitätsdomäne zugeordnet ist und für welche eine Software-Aktualisierung der zweiten Kritikalitätsstufe vorgesehen ist, bis zu einer regulären Revision der Komponente; und/oder
- sofortiges Aktualisieren mindestens einer der Komponente des Computersystems, welche der dritten Kritikalitätsdomäne zugeordnet ist und für welche eine Software-Aktualisierung der ersten Kritikalitätsstufe vorgesehen ist; und/oder
- Aktualisieren mindestens einer Komponente eines redundanten zweiten Computersystems und aktualisieren der entsprechenden Komponenten des Computersystems, welche der ersten Kritikalitätsdomäne zugeordnet ist und für welche eine Software-Aktualisierung der ersten Kritikalitätsstufe vorgesehen ist, nachdem eine fehlerfreie Funktion der mindestens einen aktualisierten Komponente des redundanten zweiten Computersystems festgestellt wird.

Die genannten Kritikalitätsdomänen und die Kritikalitätsstufen in Kombination mit den genannten Möglichkeiten zur Aktualisierung ermöglichen eine sehr einfache und granulare automatische Steuerung der Software-Aktualisierung von Komponenten eines Computersystems.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Im Rahmen dieser Erfindung ist unter dem Begriff Computersystem nicht nur ein einzelner Computer zu verstehen. Vielmehr kann ein Computersystem eine Vielzahl miteinander Vernetzter Computer und/oder Netzwerkteilnehmer aufweisen. Dabei können die Netzwerkteilnehmer z.B. netzwerkfähige eingebettete Systeme aber auch netzwerkfähige Aktuatoren und Sensoren sein.

In einer Ausführungsform kann das Computersystem auch ein einzelnes Computersystem bzw. ein auf dem Computersystem eingesetztes Computerprogramm-Produkt sein und die Komponenten des Computersystems sind einzelne Programmmodule des Computerprogramm-Produkts.

### Inhaltsangabe der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Ablaufdiagramm einer Ausführungsform eines erfindungsgemäßen Verfahrens;
- Fig. 2: ein Blockdiagramm einer Ausführungsform einer erfindungsgemäßen Vorrichtung.

In allen Figuren sind gleiche bzw. funktionsgleiche Elemente und Vorrichtungen - sofern nichts anderes angegeben ist - mit denselben Bezugszeichen versehen worden.

### Beschreibung von Ausführungsbeispielen

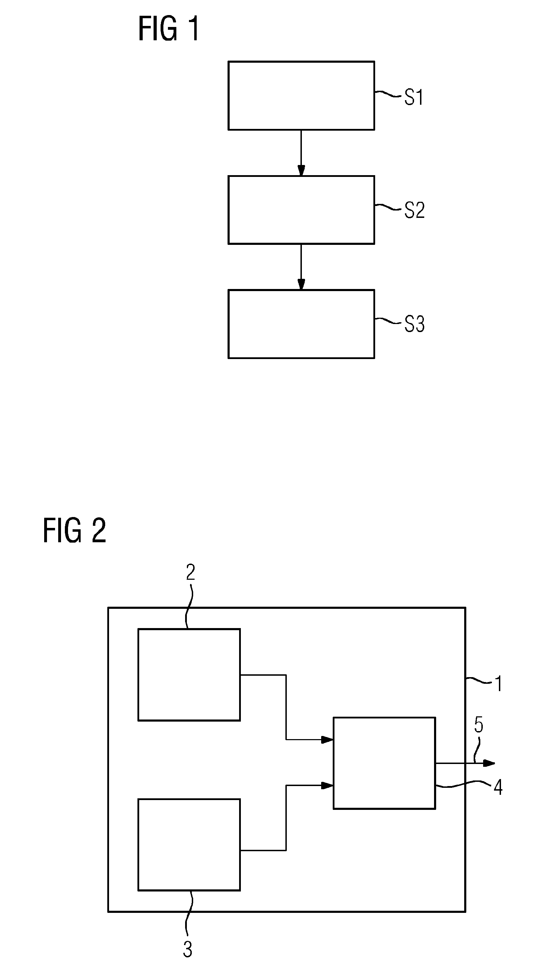

Fig. 1 zeigt ein Ablaufdiagramm einer Ausführungsform eines erfindungsgemäßen Verfahrens.

In einem ersten Schritt S1 wird mindestens eine Komponente des zu aktualisierenden Computersystems zu einer Kritikalitätsdomäne aus einer Vielzahl von vorgegebenen Kritikalitätsdomänen zugeordnet.

In einem zweiten Schritt S2 wird eine Kritikalitätsstufe aus einer Vielzahl von vorgegebenen Kritikalitätsstufen zu mindestens einer für eine der Komponenten des Computersystems vorgesehenen Software-Aktualisierung 5 zugewiesen;

In einem dritten Schritt S3 werden die Software-Aktualisierungen 5 an die entsprechenden Komponenten des Computersystems gemäß der den Komponenten zugeordneten Kritikalitätsdomäne und gemäß den den Software-Aktualisierungen 5 zugewiesenen Kritikalitätsstufen übertragen.

Das Zuordnen S1 der mindestens einen Komponente des zu aktualisierenden Computersystems geschieht dabei automatisch anhand von Meta-Tags, Funktionsbeschreibungen und/oder Kritikalitäts-Kennzahlen, die z.B. bereits bei der Produktion der Komponenten, bei der Planung des Computersystems, welches die jeweiligen Komponente aufweist, bei der Installation des Computersystems oder dergleichen für jede der Komponenten festgelegt werden. Dazu können z.B. Meta-Tags vorgegeben werden, die bestimmte Eigenschaften oder Anforderungen einer Komponente des Computersystems kennzeichnen und jeder Eigenschaft oder Anforderung wird ein vorgegebener Wert zugeordnet. In einer Ausführungsform werden z.B. die Werte aller einer Komponente zugeordneten Eigenschaften und Anforderungen aufsummiert und die jeweilige Komponente anhand dieser Summe einer Kritikalitätsdomäne zugeordnet. Beispielsweise kann für jede Kritikalitätsdomäne ein Wertebereich festgelegt werden.

Ferner können bestimmte Meta-Tags eine Signalfunktion ausüben. Z.B. kann eine Komponente, welche mit einem dieser bestimmten Meta-Tags gekennzeichnet ist, unabhängig von den weiteren Meta-Tags, welche dieser Komponente zugeordnet sind, sofort einer bestimmten Kritikalitätsdomäne zugeordnet werden.

In einer weiteren Ausführungsform kann das Zuordnen S1 auch von einem Administrator durchgeführt werden.

Schließlich können einzelne Komponenten des Computersystems in sog. Sicherheitszonen eingeordnet werden. Dabei kennzeichnet eine Sicherheitszone einen Bereich eines Computersystems, z.B. einen Abschnitt eines Datennetzwerks einer Steuerung einer Industrieanlage, welcher durch bestimmte Sicherungsmaßnahmen geschützt ist. So können z.B. für die Funktion der Industrieanlage hoch relevante Komponenten gemeinsam in einem Bereich des Datennetzwerks der Steuerung der Industrieanlage angeordnet werden, der durch eine Firewall und/oder weitere Schutzsysteme gegen einen unberechtigten Zugriff geschützt ist.

Ferner kann das Zuweisen S2 von Kritikalitätsstufen zu einzelnen Software-Aktualisierungen 5 analog zu dem Zuordnen S1 der Komponenten des Computersystems zu den Kritikalitätsdomänen erfolgen.

In einer Ausführungsform wird in einem weiteren Schritt analysiert, welche Komponente des Computersystems von weiteren Komponenten des Computersystems abhängt und, falls notwendig, die Zuordnung der Komponenten zu den Kritikalitätsdomänen angepasst. Tabelle 1 zeigt beispielhaft Abhängigkeiten zwischen Komponenten eines Computersystems.

**Tabelle 1**

| Komponente | A | B | C |
|---|---|---|---|
| A | X | nein | nein |
| B | ja | X | ja |
| C | nein | ja | X |

Tabelle 1 ist als eine Matrix aufgebaut, bei der in den Spalten und Reihen jeweils die Komponenten A, B und C dargestellt sind. Die Felder der Matrix kennzeichnen jeweils die Abhängigkeit der in der linken Spalte dargestellten Komponente von der entsprechenden in der ersten Reihe dargestellten Komponente. Die Zellen, die sich jeweils auf die gleiche Komponente, z.B. A - A, B - B, C - C, beziehen, sind mit einem "X" gekennzeichnet, da eine Komponente nicht von sich selbst abhängig sein kann.

Ferner kennzeichnet ein "ja" in Tabelle 1 eine Abhängigkeit der in der linken Spalte dargestellten Komponente von der entsprechenden in der ersten Reihe dargestellten Komponente. Beispielsweise ist die Komponente B von den Komponenten A und C abhängig.

In einer Ausführungsform wird die Komponente B nun derjenigen Kritikalitätsdomäne zugeordnet, welcher eine der Komponenten A und C zugeordnet ist, und welche eine höhere Kritikalität gegenüber der relevanten Funktionalität des Computersystems bedeutet.

Anhand der den Kritikalitätsdomänen zugeordneten Komponenten und der Kritikalitätsstufen kann daraufhin eine automatische Übertragung der Aktualisierungen an die Komponenten erfolgen. Tabelle 2 zeigt eine mögliche Bewertungsmatrix, anhand derer ausgewählt werden kann, wie die jeweiligen Komponenten des Computersystems aktualisiert werden können. Je niedriger in Tabelle 2 die Kritikalitätsstufe ist, desto wichtiger ist die Software-Aktualisierung 5.

**Tabelle 2**

| Komponente | Kritikalitätsdomäne | Abhängigkeit | Abgeleitete Aktualisierungsrelevanz | Übertragen aller SW-Aktualisierungen mit Kritikalitätsstufe >= |
|---|---|---|---|---|
| A | niedrig | niedrig | niedrig | 1 |
| B | niedrig | mittel | mittel | 3 |
| C | hoch | hoch | hoch | 1 |

Beispielsweise kann die Komponente A in einer Ausführungsform sofort und ohne weiteren Test aktualisiert werden, da eine Fehlfunktion der Komponente A für das Computersystem unkritisch ist.

Die Komponente B kann beispielsweise in einer Ausführungsform mit einer zukünftigen regulären System-Aktualisierung aktualisiert werden. Dadurch werden außerordentliche Testaufwände verringert.

Die Komponente C kann beispielsweise in einer Ausführungsform sehr zeitnah aktualisiert werden, da sowohl die Komponente als auch die Software-Aktualisierung 5 kritisch für die Funktionalität des Computersystems sind. Allerdings wird die Komponente C nicht direkt aktualisiert. Vielmehr wird die Software-Aktualisierung 5 auf einer Komponente C eines sog. Staging-Systems bzw. eines redundanten Test-Systems eingespielt. Erst, wenn die einwandfreie Funktion der Komponente C mit der Software-Aktualisierung 5 in dem Staging-System nachgewiesen ist, wird die Software-Aktualisierung 5 daraufhin an die Komponente C des Produktiv-Computersystems übertragen.

Fig. 2 zeigt ein Blockdiagramm einer Ausführungsform einer erfindungsgemäßen Vorrichtung 1 zur automatischen Software-Aktualisierung 5 eines Computersystems.

Die Vorrichtung 1 weist eine Zuordnungseinrichtung 2 und eine Zuweisungseinrichtung 3 auf, die beide mit einer automatischen Software-Übertragungseinrichtung 4 gekoppelt sind.

Die Zuordnungseinrichtung 2 ist dazu ausgebildet, mindestens eine Komponente des zu aktualisierenden Computersystems einer Kritikalitätsdomäne aus einer Vielzahl von vorgegebenen Kritikalitätsdomänen zuzuordnen. Ferner ist die Zuweisungseinrichtung 3 dazu ausgebildet, mindestens einer für eine der Komponenten des Computersystems vorgesehenen Software-Aktualisierung 5 eine Kritikalitätsstufe aus einer Vielzahl von vorgegebenen Kritikalitätsstufen zu zuzuweisen. Schließlich ist die automatische Software-Übertragungseinrichtung 4 dazu ausgebildet, die Software-Aktualisierungen 5 an die entsprechenden Komponenten des Computersystems gemäß den den Komponenten zugeordneten Kritikalitätsdomänen und gemäß den den Software-Aktualisierungen 5 zugewiesenen Kritikalitätsstufen zu übertragen.

In einer Ausführungsform sind die Zuordnungseinrichtung 2 und die Zuweisungseinrichtung 3 als Prozessor-gesteuerte Vorrichtungen 2 und 3 ausgebildet, die dazu ausgebildet sind, die Zuordnung und Zuweisung durchzuführen. Dazu sind die Zuordnungseinrichtung 2 und die Zuweisungseinrichtung 3 dazu ausgebildet, die Zuordnung bzw. Zuweisung automatisch anhand von Meta-Tags, Funktionsbeschreibungen und/oder Kritikalitäts-Kennzahlen, die z.B. bereits bei der Produktion der Komponenten, bei der Planung des Computersystems, welches die jeweiligen Komponente aufweist, bei der Installation des Computersystems oder dergleichen für jede der Komponenten festgelegt werden, durchzuführen.

Die Vorrichtung 1 ist in einer Ausführungsform als Computer-Programmprodukt ausgebildet, welches die beanspruchte Funktionalität in einem Computer, z.B. einem mit Windows-Betriebssystem betriebenen Computer, ermöglicht.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

In einer Ausführungsform ist eine Vorrichtung zum automatischen Aktualisieren eines Computersystems, insbesondere einer Steuerung für Industrieanlagen, das aus mehreren Komponenten besteht, vorgesehen, mit
Mitteln zum Zuordnen S1 mindestens einer Komponente des zu aktualisierenden Computersystems zu einer Kritikalitätsdomäne aus einer Vielzahl von vorgegebenen Kritikalitätsdomänen;
Mitteln zum Zuweisen S2 einer Kritikalitätsstufe aus einer Vielzahl von vorgegebenen Kritikalitätsstufen zu mindestens einer für eine der Komponenten des Computersystems vorgesehenen Software-Aktualisierung 5;
Mitteln zum automatischen Übertragen S3 der Software-Aktualisierungen 5 an die entsprechenden Komponenten des Computersystems gemäß der den Komponenten zugeordneten Kritikalitätsdomäne und gemäß den den Software-Aktualisierungen 5 zugewiesenen Kritikalitätsstufen.

In einer Ausführungsform ist eine erfindungsgemäße Vorrichtung vorgesehen, mit
Mittel zum Festlegen von Meta-Tags und/oder Kritikalitäts-Kennzahlen und/oder Funktionsbeschreibungen für mindestens eine der Komponenten des Computersystems,
wobei das Zuordnen S1 basierend auf den für die jeweilige Komponente des Computersystems festgelegten Meta-Tags und/oder Kritikalitäts-Kennzahlen und/oder Funktionsbeschreibungen automatisch durchgeführt wird.

In einer Ausführungsform ist eine erfindungsgemäße Vorrichtung vorgesehen, mit
Mittel zum Festlegen von Meta-Tags und/oder Kritikalitäts-Kennzahlen und/oder Funktionsbeschreibungen für mindestens eine der Software-Aktualisierungen 5,
wobei das Zuweisen S2 basierend auf den für die jeweiligen Software-Aktualisierungen 5 vergebenen Meta-Tags und/oder Kritikalitäts-Kennzahlen und/oder Funktionsbeschreibungen automatisch durchgeführt wird.

In einer Ausführungsform ist eine erfindungsgemäße Vorrichtung vorgesehen, mit
Mittel zum Bestimmen einer Abhängigkeit mindestens einer der Komponenten des Computersystems von den weiteren Komponenten des Computersystems;
Mittel zum Anpassen der Zuordnung der mindestens einen Komponente zu mindestens einer der vorgegebenen Kritikalitätsdomänen basierend auf der bestimmten Abhängigkeit der Komponente von den weiteren Komponenten des Computersystems.

In einer Ausführungsform ist eine erfindungsgemäße Vorrichtung vorgesehen, mit
Mitteln zum Definieren mindestens einer relevanten Funktionalität des Computersystems;
Mitteln zum Festlegen der Vielzahl von Kritikalitätsdomänen, wobei jede Kritikalitätsdomäne eine unterschiedliche Relevanz einer der Komponenten des Computersystems bezüglich der Durchführung der relevanten Funktionalitäten des Computersystems angibt;
Mitteln zum Festlegen der Vielzahl von Kritikalitätsstufen, wobei jede Kritikalitätsstufe ein Ausmaß eines Einflusses mindestens einer der Software-Aktualisierungen 5 auf die relevanten Funktionalitäten angibt.

In einer Ausführungsform ist eine erfindungsgemäße Vorrichtung vorgesehen
wobei eine erste Kritikalitätsdomäne eine hohe Kritikalität einer Komponente des Computersystems bezüglich der Durchführung der relevanten Funktionalitäten des Computersystems angibt; und/oder
wobei ein zweite Kritikalitätsdomäne eine mittlere Kritikalität einer Komponente des Computersystems bezüglich der Durchführung der relevanten Funktionalitäten des Computersystems angibt; und/oder
wobei ein dritte Kritikalitätsdomäne eine niedrige Kritikalität einer Komponente des Computersystems bezüglich der Durchführung der relevanten Funktionalitäten des Computersystems angibt; und/oder
wobei eine erste Kritikalitätsstufe ein hohes Ausmaß des Einflusses mindestens einer der Software-Aktualisierungen 5 auf die relevanten Funktionalitäten angibt; und/oder
wobei eine zweite Kritikalitätsstufe ein mittleres Ausmaß des Einflusses mindestens einer der Software-Aktualisierungen 5 auf die relevanten Funktionalitäten angibt; und/oder
wobei eine dritte Kritikalitätsstufe ein niedriges Ausmaß des Einflusses mindestens einer der Software-Aktualisierungen 5 auf die relevanten Funktionalitäten angibt.

In einer Ausführungsform ist eine erfindungsgemäße Vorrichtung vorgesehen,
wobei die Mittel zum automatischen Aktualisieren S3 Mittel aufweisen zum:
- verzögerten Aktualisieren mindestens einer der Komponenten des Computersystems, welche der zweiten Kritikalitätsdomäne zugeordnet ist und für welche eine Software-Aktualisierung 5 der zweiten Kritikalitätsstufe vorgesehen ist, bis zu einer regulären Revision der Komponente; und/oder
- sofortigen Aktualisieren mindestens einer der Komponente des Computersystems, welche der dritten Kritikalitätsdomäne zugeordnet ist und für welche eine Software-Aktualisierung 5 der ersten Kritikalitätsstufe vorgesehen ist; und/oder
- Aktualisieren mindestens einer Komponente eines redundanten zweiten Computersystems und aktualisieren der entsprechenden Komponenten des Computersystems, welche der ersten Kritikalitätsdomäne zugeordnet ist und für welche eine Software-Aktualisierung 5 der ersten Kritikalitätsstufe vorgesehen ist, nachdem eine fehlerfreie Funktion der mindestens einen aktualisierten Komponente des redundanten zweiten Computersystems festgestellt wird.

## Patentansprüche

1. Verfahren zum automatischen Aktualisieren eines Computersystems, insbesondere einer Steuerung für Industrieanla-gen, das aus mehreren Komponenten besteht, mit den Schritten:
- Zuordnen (S1) mindestens einer Komponente des zu aktualisierenden Computersystems zu einer Kritikalitätsdomäne aus einer Vielzahl von vorgegebenen Kritikalitätsdomänen;
- Zuweisen (S2) einer Kritikalitätsstufe aus einer Vielzahl von vorgegebenen Kritikalitätsstufen zu mindestens einer für eine der Komponenten des Computersystems vorgesehenen Software-Aktualisierung (5);
- automatisches Übertragen (S3) der Software-Aktualisierungen (5) an die entsprechenden Komponenten des Computersystems gemäß der den Komponenten zugeordneten Kritikalitätsdomäne und gemäß den den Software-Aktualisierungen (5) zugewiesenen Kritikalitätsstufen.

2. Verfahren nach Anspruch 1 mit dem weiteren Schritt:
Festlegen von Meta-Tags und/oder Kritikalitäts-Kennzahlen und/oder Funktionsbeschreibungen für mindestens eine der Komponenten des Computersystems,
wobei das Zuordnen (S1) basierend auf den für die jeweilige Komponente des Computersystems festgelegten Meta-Tags und/oder Kritikalitäts-Kennzahlen und/oder Funktionsbeschreibungen automatisch durchgeführt wird.

3. Verfahren nach einem der vorherigen Ansprüche mit dem weiteren Schritt:
Festlegen von Meta-Tags und/oder Kritikalitäts-Kennzahlen und/oder Funktionsbeschreibungen für mindestens eine der Software-Aktualisierungen (5),
wobei das Zuweisen (S2) basierend auf den für die jeweiligen Software-Aktualisierungen (5) vergebenen Meta-Tags und/oder Kritikalitäts-Kennzahlen und/oder Funktionsbe-schreibungen automatisch durchgeführt wird.

4. Verfahren nach einem der vorherigen Ansprüche mit den weiteren Schritten:
Bestimmen einer Abhängigkeit mindestens einer der Komponenten des Computersystems von den weiteren Komponenten des Computersystems;
Anpassen der Zuordnung der mindestens einen Komponente zu mindestens einer der vorgegebenen Kritikalitätsdomänen basierend auf der bestimmten Abhängigkeit der Komponente von den weiteren Komponenten des Computersystems.

5. Verfahren nach einem der vorherigen Ansprüche mit den weiteren Schritten:
Definieren mindestens einer relevanten Funktionalität des Computersystems;
Festlegen der Vielzahl von Kritikalitätsdomänen, wobei jede Kritikalitätsdomäne eine unterschiedliche Relevanz einer der Komponenten des Computersystems bezüglich der Durchführung der relevanten Funktionalitäten des Computersystems angibt;
Festlegen der Vielzahl von Kritikalitätsstufen, wobei jede Kritikalitätsstufe ein Ausmaß eines Einflusses mindestens einer der Software-Aktualisierungen (5) auf die relevanten Funktionalitäten angibt.

6. Verfahren nach Anspruch 5, wobei eine erste Kritikalitätsdomäne eine hohe Kritikalität einer Komponente des Computersystems bezüglich der Durchführung der relevanten Funktionalitäten des Computersystems angibt; und/oder
wobei ein zweite Kritikalitätsdomäne eine mittlere Kritikalität einer Komponente des Computersystems bezüglich der Durchführung der relevanten Funktionalitäten des Computersystems angibt; und/oder
wobei ein dritte Kritikalitätsdomäne eine niedrige Kritikalität einer Komponente des Computersystems bezüglich der Durchführung der relevanten Funktionalitäten des Computersystems angibt; und/oder
wobei eine erste Kritikalitätsstufe ein hohes Ausmaß des Einflusses mindestens einer der Software-Aktualisierungen (5) auf die relevanten Funktionalitäten angibt; und/oder wobei eine zweite Kritikalitätsstufe ein mittleres Ausmaß des Einflusses mindestens einer der Software-Aktualisierungen (5) auf die relevanten Funktionalitäten angibt; und/oder wobei eine dritte Kritikalitätsstufe ein niedriges Ausmaß des Einflusses mindestens einer der Software-Aktualisierungen (5) auf die relevanten Funktionalitäten angibt.

7. Verfahren nach einem der vorherigen Ansprüche, wobei der Schritt des automatischen Aktualisierens (S3) aufweist:
- verzögertes Aktualisieren mindestens einer der Komponenten des Computersystems, welche der zweiten Kritikalitätsdomäne zugeordnet ist und für welche eine Software-Aktualisierung (5) der zweiten Kritikalitätsstufe vorgesehen ist, bis zu einer regulären Revision der Komponente; und/oder
- sofortiges Aktualisieren mindestens einer der Komponente des Computersystems, welche der dritten Kritikalitätsdomäne zugeordnet ist und für welche eine Software-Aktualisierung (5) der ersten Kritikalitätsstufe vorgesehen ist; und/oder
- Aktualisieren mindestens einer Komponente eines redundanten zweiten Computersystems und aktualisieren der entsprechenden Komponenten des Computersystems, welche der ersten Kritikalitätsdomäne zugeordnet ist und für welche eine Software-Aktualisierung (5) der ersten Kritikalitätsstufe vorgesehen ist, nachdem eine fehlerfreie Funktion der mindestens einen aktualisierten Komponente des redundanten zweiten Computersystems festgestellt wird.

8. Vorrichtung zur automatischen Software-Aktualisierung (5) eines Computersystems mit:
einer Zuordnungseinrichtung, welche dazu ausgebildet ist, mindestens eine Komponente des zu aktualisierenden Computersystems einer Kritikalitätsdomäne aus einer Vielzahl von vorgegebenen Kritikalitätsdomänen zuzuordnen;
einer Zuweisungseinrichtung, welche dazu ausgebildet ist, mindestens einer für eine der Komponenten des Computersystems vorgesehenen Software-Aktualisierung (5) eine Kritikalitätsstufe aus einer Vielzahl von vorgegebenen Kritikalitätsstufen zu zuzuweisen;
einer automatischen Software-Übertragungseinrichtung, welche dazu ausgebildet ist, die Software-Aktualisierungen (5) an die entsprechenden Komponenten des Computersystems gemäß den den Komponenten zugeordneten Kritikalitätsdomänen und gemäß den den Software-Aktualisierungen (5) zugewiesenen Kritikalitätsstufen zu übertragen.

9. Vorrichtung nach Anspruch 8 mit einer ersten Spezifikationseinrichtung, welche dazu ausgebildet ist, Meta-Tags und/oder Kritikalitäts-Kennzahlen und/oder Funktionsbeschreibungen für mindestens eine der Komponenten des Computersystems automatisch aus einer Datenquelle auszulesen und/oder von einem Benutzer zu erhalten,
wobei die Zuordnungseinrichtung dazu ausgebildet ist, den entsprechenden Komponenten ein Kritikalitätsdomäne aus der Vielzahl von Kritikalitätsdomänen basierend auf den für die jeweilige Komponente erhaltenen Meta-Tags und/oder Kritikalitäts-Kennzahlen und/oder Funktionsbe-schreibungen automatisch zuzuordnen.

10. Vorrichtung nach einem der vorherigen Ansprüche 8 und 9 mit einer zweiten Spezifikationseinrichtung, welche dazu ausgebildet ist, Meta-Tags und/oder Kritikalitäts-Kennzahlen und/oder Funktionsbeschreibungen für eine der Software-Aktualisierungen (5) automatisch aus einer Datenquelle auszulesen und/oder von einem Benutzer zu erhalten,
wobei die Zuweisungseinrichtung dazu ausgebildet ist, den entsprechenden Software-Aktualisierungen (5) eine Kritikalitätsstufe aus der Vielzahl von Kritikalitätsstufen basierend auf den für die jeweilige Software-Aktualisierung (5) erhaltenen Meta-Tags und/oder Kritikalitäts-Kennzahlen und/oder Funktionsbeschreibungen automatisch zuzuweisen.

11. Vorrichtung nach einem der vorherigen Ansprüche 9 bis 10, wobei die Zuordnungseinrichtung ferner dazu ausgebildet ist, eine Abhängigkeit mindestens einer der Komponenten des Computersystems von den weiteren Komponenten des Computersystems zu bestimmen, und die Zuordnung der mindestens einen Komponente zu mindestens einer vorgegebenen Kritikalitätsdomäne basierend auf der bestimmten Abhängigkeit der Komponente von weiteren Komponenten des Computersystems anzupassen.

12. Vorrichtung nach einem der vorherigen Ansprüche 9 bis 11 mit einer dritten Spezifikationseinrichtung, welche dazu ausgebildet ist eine relevanten Funktionalität des Computersystems aus einer Datenquelle auszulesen und/oder von einem Benutzer zu erhalten und mindestens eine der Kritikalitätsdomänen und/oder eine der Kritikalitätsstufen vorzugeben,
wobei jede der vorgegebenen Kritikalitätsdomänen eine unterschiedliche Relevanz einer der Komponenten des Computersystems bezüglich der Sicherstellung der relevanten Funktionalität des Computersystems angibt; und/oder
wobei jede der vorgegebenen Kritikalitätsstufe ein Ausmaß eines Einflusses mindestens einer der Software-Aktualisierungen (5) auf die relevanten Funktionalitäten angibt.

13. Vorrichtung nach Anspruch 12, wobei die dritte Spezifikationseinrichtung dazu ausgebildet ist:
eine erste Kritikalitätsdomäne vorzugeben, welche eine hohe Kritikalität einer Komponente des Computersystems bezüglich der Durchführung der relevanten Funktionalitäten des Computersystems angibt; und/oder
eine zweite Kritikalitätsdomäne vorzugeben, welche eine mittlere Kritikalität einer Komponente des Computersystems bezüglich der Durchführung der relevanten Funktionalitäten des Computersystems angibt; und/oder
eine dritte Kritikalitätsdomäne vorzugeben, welche eine niedrige Kritikalität einer Komponente des Computersystems bezüglich der Durchführung der relevanten Funktionalitäten des Computersystems angibt; und/oder
eine erste Kritikalitätsstufe vorzugeben, welche ein hohes Ausmaß des Einflusses mindestens einer der Software-Aktualisierungen (5) auf die relevanten Funktionalitäten angibt; und/oder
eine zweite Kritikalitätsstufe vorzugeben, welche ein mittleres Ausmaß des Einflusses mindestens einer der Software-Aktualisierungen (5) auf die relevanten Funktionalitäten angibt; und/oder
eine dritte Kritikalitätsstufe vorzugeben, welche ein niedriges Ausmaß des Einflusses mindestens einer der Software-Aktualisierungen (5) auf die relevanten Funktionalitäten angibt.

14. Vorrichtung nach einem der vorherigen Ansprüche 12 und 13, wobei die automatische Software-Übertragungseinrichtung dazu ausgebildet ist:
- mindestens eine der Komponenten des Computersystems, welche der zweiten Kritikalitätsdomäne zugeordnet ist und für welche eine Software-Aktualisierung (5) der zweiten Kritikalitätsstufe vorgesehen ist, mit einer regulären Revision der Komponente verzögert zu aktualisieren; und/oder
- mindestens einer der Komponente des Computersystems, welche der dritten Kritikalitätsdomäne zugeordnet ist und für welche eine Software-Aktualisierung (5) der ersten Kritikalitätsstufe vorgesehen ist, sofort zu aktualisieren; und/oder
- mindestens eine Komponente eines redundanten zweiten Computersystems zu aktualisieren und die entsprechenden Komponenten des Computersystems, welche der ersten Kritikalitätsdomäne zugeordnet ist und für welche eine Software-Aktualisierung (5) der ersten Kritikalitätsstufe vorgesehen ist, zu aktualisieren nachdem eine fehlerfreie Funktion der mindestens einen aktualisierten Komponente des redundanten zweiten Computersystems festgestellt wird.
